# EUROPEAN PATENT SPECIFICATION

(11) **EP 3 940 518 B1**
(45) Date of publication and mention of the grant of the patent: **20.08.2025**
(21) Application number: 19948679.6
(22) Date of filing: 18.12.2019
(51) Int. Cl.: G06F 3/0481, G06F 3/04847, G06F 3/0354, G06F 3/0338, G06F 3/0362, G06F 3/0482, G06F 3/0483, G06F 3/0485, G06F 3/04883

(54) **METHOD FOR MOVING INTERFACE ELEMENTS, SYSTEM, VEHICLE AND STORAGE MEDIUM**
VERFAHREN ZUR BEWEGUNG VON SCHNITTSTELLENELEMENTEN, SYSTEM, FAHRZEUG UND SPEICHERMEDIUM
PROCÉDÉ DE DÉPLACEMENT D'ÉLÉMENTS D'INTERFACE, SYSTÈME, VÉHICULE ET SUPPORT DE STOCKAGE

(30) Priority: 09.10.2019 CN 201910955328
(43) Date of publication of application: 19.01.2022
(73) Proprietor: Guangdong Xiaopeng Motors Technology Co., Ltd., Sino-Singapore Knowledge City, Huangpu District Guangzhou, Guangdong 510555 (CN)
(72) Inventor: LI, Wenyuan, Guangzhou, Guangdong 510555 (CN)
(74) Representative: Ran, Handong
(86) International application number: PCT/CN2019/126413
(87) International publication number: WO 2021/068410

(56) References cited:
- CN-A- 102 407 876
- CN-A- 105 717 807
- CN-A- 105 717 807
- CN-A- 109 947 256
- US-A1- 2009 141 046
- US-A1- 2013 285 949
- US-A1- 2013 314 321

## Description

### Field of Invention

The present invention relates to the technical field of human and vehicle interactions, and in particular, to a method and system for moving interface elements, and a vehicle.

### Background

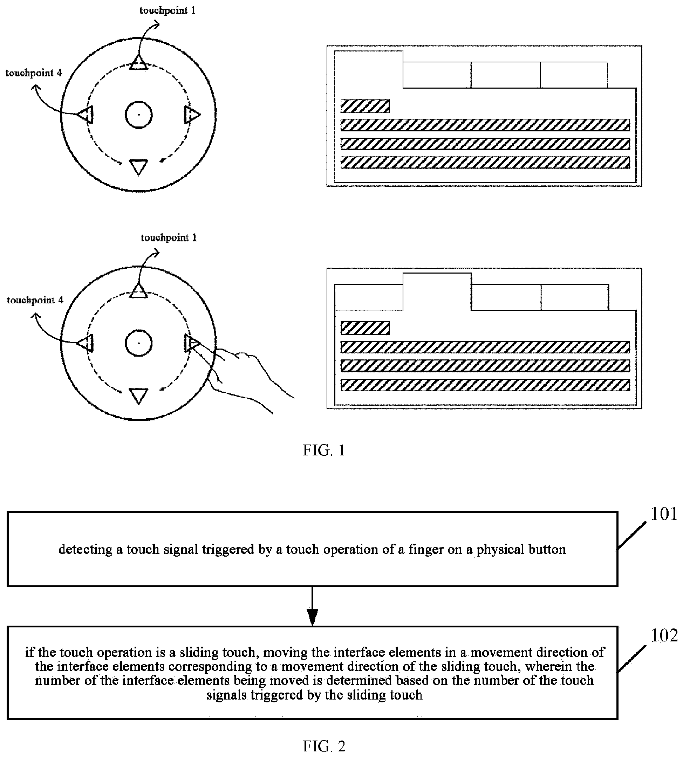

Currently, most vehicles are provided with an electronic display screen. A user interface on the electronic display screen may include multiple interface elements (e.g., tabs). When interface elements need to be moved, a user may move the interface elements using a physical button in the vehicle. For example, referring to FIG. 1, which is an exemplary diagram illustrating movement of tabs by means of a physical button. Most buttons are provided with fixed touchpoints, each of which may indicate a movement direction, as shown in FIG. 1. When the user presses or touches a touchpoint, interface elements may be controlled to move in a movement direction indicated by the touchpoint.

In practice, however, in moving a large number of interface elements, the user is often required to press or touch a touchpoint or touchpoints multiple times, which is cumbersome and results in inefficient movement.

Patent application publication US2009141046 (A1) discloses a multi-dimensional scroll wheel, which is provided to detect input gestures that traverse the center of the scroll wheel and to detect multi-touch input, wherein the scroll wheel can include a first plurality of sensor elements arranged in a first closed loop and a second plurality of sensor elements arranged in a second closed loop, the first and second closed loops being concentrically arranged about the center of the scroll wheel. Patent application publication US2013285949 (A1) is a document of the prior art in the technical field in question.

### Summary of Invention

The present invention provides a method and a system for moving interface elements, a vehicle, and a storage medium, which allow quick movement of interface elements through sliding touch of a button, and improve efficiency in movement of interface elements.

Aspects of the present invention are set out in the accompanying independent claims. Optional features of the invention are set out in the accompanying dependent claims.

In accordance with a first aspect of the present invention, there is provided a method for moving interface elements.

In accordance with a second aspect of the present invention, there is provided a system for moving interface elements.

In accordance with a third aspect of the present invention, there is provided a computer-readable storage medium.

Compared to the conventional art, the present invention can achieve the beneficial effects set out below.

When a finger performs a sliding touch on a physical button, a touch signal is triggered when the finger passes a touchpoint. In response to the touch signals triggered by the sliding touch, interface elements can be controlled to move in an interface element movement direction corresponding to the movement direction of the sliding touch. Thus, the interface elements can be quickly moved by one sliding touch, without multiple presses or touches, thereby improving efficiency of the movement.

### Brief Description of Drawings

In order to clearly illustrate the technical solutions in the embodiments of the present invention, brief description of the drawings pertinent to the embodiments will be provided. It should be apparent to a skilled person in the art that the drawings described below are for the purpose of illustrating embodiments of the present invention only. The skilled person will be able to devise further drawings based on the provided drawings herein without exercising any inventive efforts.
FIG. 1 is an exemplary diagram showing movement of a tab by means of a physical button according to an embodiment of the present invention;
FIG. 2 is a flowchart illustrating a method for moving interface elements according to an embodiment of the present invention;
FIG. 3 is an exemplary diagram of a physical button including visible touchpoints and hidden touchpoints according to an embodiment of the present invention;
FIG. 4-1 is an exemplary diagram showing movement of tabs through a sliding touch according to an embodiment of the present invention;
FIG. 4-2 is another exemplary diagram showing movement of tabs through a sliding touch according to an embodiment of the present invention;
FIG. 5-1 is another exemplary diagram showing movement of tabs through a sliding touch according to an embodiment of the present invention;
FIG. 5-2 is still another exemplary diagram showing movement of tabs through a sliding touch according to an embodiment of the present invention;
FIG. 6 is an exemplary diagram showing an arrangement of physical buttons according to an embodiment of the present invention;
FIG. 7 is a schematic structural diagram illustrating a system for moving interface elements according to an embodiment of the present invention.

### Detailed Description

The technical solutions in the embodiments of the present invention will be described clearly and thoroughly with reference to the accompanying drawings. The described embodiments merely show some but not all possible ways for practicing the present invention. All other embodiments that those of ordinary skills in the art could derive without inventive efforts fall within the scope of the present invention as defined by the appended claims.

It is to be noted that terms "including," "comprising," "having," and any variations thereof herein are intended to encompass items listed thereafter non-exclusively. For example, a process, method, system, product, or device that comprises a series of steps or units is meant to not only include the listed steps or units, but also may optionally include additional steps or units not listed or any steps or units inherent to such a process, method, system, product, or device.

With the method and the system for moving interface elements, the vehicle and the storage medium disclosed, the interface elements can be quickly moved through a touch on a button on a button, thereby improving efficiency in movement. Details are described below.

Referring to FIG. 2, which is a flowchart illustrating a method for moving interface elements according to an embodiment of the present invention. As shown in FIG. 2, the method for moving interface elements include the following steps.

At step 101, a touch signal triggered by a touch operation of a finger on a physical button is detected.

In an embodiment of the present invention, the physical button may be a touch button, and a touch operation of a finger touching the button can be detected. The physical button may be provided in advance with one or more touchpoints. When the finger touches a touchpoint, a touch signal will be triggered. Reference is made to FIG. 1 again, the physical button shown in FIG. 1 is provided with icons on its surface where touchpoints are located. An icon may be used to indicate a direction of movement corresponding to a touchpoint or an interactive function associated with the touchpoint.

A touch operation performed by a user touching the physical button with his / her finger may include a single touch on one touchpoint and a sliding touch passing through at least two touchpoints. The operation of touching one touchpoint may include a short-time touch and a long-time touch. The short-time touch refers to a touch operation performed on one touchpoint with a duration less than a time threshold T1. The long-time touch refers to a touch operation performed on one touchpoint with a duration greater than a time threshold T2. A sliding touch refers to a touch operation where a finger touches and moves from a touchpoint to another touchpoint. The sliding touch passes at least two adjacent touchpoints.

It will be appreciated that in an embodiment of the present invention, a touchpoint may be associated with an interactive function that is unrelated to movement of interface elements. In a case where a sliding touch passes such a touchpoint, movement of an interface element or elements, instead of control of the interactive function associated with the touchpoint, is performed in response to the sliding touch. In a case where a single touch is performed on such a touchpoint separately, the interactive function associated with the touchpoint is controlled in response to the touch operation. It can be understood that a single touch following a sliding touch may be erroneously identified as a sliding touch, which would affect the normal response of the interactive function to be controlled by the single touch.

In an optional embodiment, the following steps may be performed after step 101:
determining whether the difference between the time when the currently detected touch signal is detected and the time when the previously detected touch signal is detected is greater than a preset time threshold; and
if not, determining the touch operation triggering the currently detected touch signal as a sliding touch.

With the embodiment, a sliding touch and a single touch on one touchpoint can be accurately identified. With the embodiment, especially in a case where a user continuously touches N touchpoints by a sliding touch and after that touches one touchpoint separately, the N touchpoints corresponding to the sliding touch can be accurately distinguished from the single touchpoint corresponding to the single touch, thereby reducing the possibility of erroneously identifying a single touch performed after a sliding touch as a sliding touch. The preset time threshold may be determined based on the average time needed for a finger to pass two adjacent touchpoints during a sliding touch. It can be appreciated, performing a single touch after a sliding touch requires the user to perform an operation of lifting and then pressing of the finger. The time taken by such an operation is greater than the average time for the finger to slide through two adjacent touchpoints. Thus, a sliding touch can be distinguished from a single touch based on time.

Further optionally, after determining that the difference between the time when the currently detected touch signal is detected and the time when the previously detected touch signal is detected is greater than the preset time threshold and before determining the touch operation triggering the currently detected touch signal is a sliding touch, the following operations may be performed:
determining, based on identifiers of the signals, whether a touchpoint corresponding to the currently detected touch signal is located adjacent to a touchpoint corresponding to the previously detected touch signal; and
if so, performing the step of determining a touch operation triggering the currently detected touch signal is a sliding touch.

With the embodiment, a verification as to whether a touch operation is a sliding touch or not can be further performed, so as to reduce the interference, caused by the user touching two touchpoints separately in a short period of time, on the determination of a sliding touch.

At step 102, if the touch operation is a sliding touch, interface elements are moved in a direction corresponding to a movement direction of the touch operation, wherein the number of the interface elements moved is determined based on the number of touch signals triggered by the sliding touch.

In an embodiment of the present invention, if the touch operation is a sliding touch, the touch operation passes at least two adjacent touchpoints. A touch signal will be triggered when the sliding touch passes each touchpoint. The touch operation as a sliding touch may thus trigger at least two touch signals. Optionally, a touch signal corresponding to each touchpoint may have a unique signal identifier to be distinguished from other touch signals.

The interface elements described above may include, but not limited to, tabs, icons, application interface diagrams, scroll bars, dialog boxes, menus, and the like.

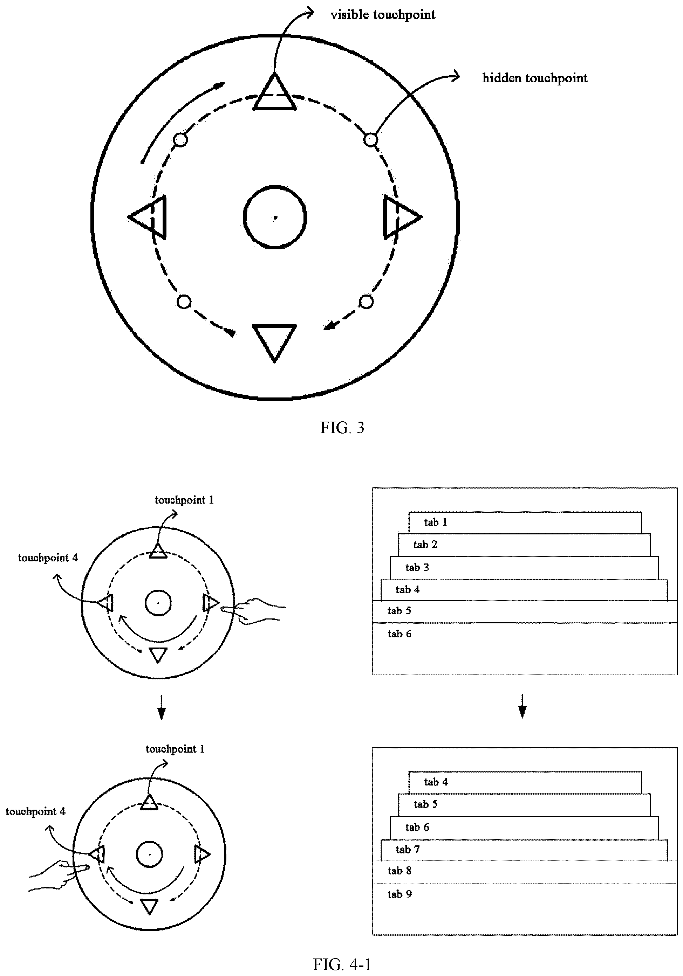

In an embodiment of the present invention, the physical button may have a visible touchpoint(s) and / or a hidden touchpoint(s). A visible touchpoint is visible on the surface of the physical button. For example, the touchpoints represented by the icons shown in FIG. 1 are visible touchpoints. A hidden touchpoint is invisible on the surface of the physical button. Referring to FIG. 3, which is an exemplary diagram of a physical button including visible touchpoints and hidden touchpoints according to an embodiment of the present invention. With the physical button including both visible touchpoints and hidden touchpoints, precision of sliding touches can be improved without altering the original design of the physical button, thereby increasing the number of interface elements that can be moved through one round of touch slide on the physical button.

For example, as shown in FIG. 1, the touchpoints represented by the icons may be labeled clockwise as touchpoint 1 ^{~} touchpoint 4, and triggered touch signals corresponding to these touchpoints may be assigned signal identifiers as signal 1 ^{~} signal 4.

Upon detection of a touch signal or touch signals triggered by a touch operation, a determination as to whether the touch operation is a sliding touch may be made based on the number of the detected touch signals and / or the differences between times at which the touch signals are detected. Further, after the touch operation is identified as a sliding touch, the order of receiving the touch signals may be determined from their signal identifiers, and the movement direction of the sliding touch may then be determined based on the receiving order.

Referring to the physical button as shown in FIG. 1, for example, if the touch signals are received in an order as signal 2, signal 3, and signal 4, it may be determined that the sliding touch passes the touchpoint 2, touchpoint 3, and touchpoint 4 in sequence. It thus may be determined that the sliding touch moves in a clockwise direction. For another example, if the touch signals are received in an order as signal 2, signal 3, signal 2, and signal 1, it may be determined that the sliding touch passes the touchpoint 2, touchpoint 3, touchpoint 2, and touchpoint 1 in sequence. It thus may be determined that the sliding touch moves first in a clockwise direction and then in a counterclockwise direction.

In an embodiment of the present invention, the movement directions of interface elements may include, but not limited to, upward direction, downward direction, left, and right. Mapping between the movement directions of sliding touches and the movement directions of interface elements may be preset. In addition, one or more interface elements may be moved in response to one triggered touch signal.

As an example, it is assumed that a clockwise movement of a sliding touch corresponds to an upward movement of interface elements, and a counterclockwise movement of a sliding touch corresponds to a downward movement of interface elements, and that each triggered touch signal will cause one interface element to move.

Reference is made to FIG. 4-1, which is an exemplary diagram showing movement of tabs through a sliding touch according to an embodiment of the present invention. As shown in FIG. 4-1, the touch operation passes touchpoint 2, touchpoint 3 and touchpoint 4 in sequence, and thus the tabs are shifted upwards by 3.

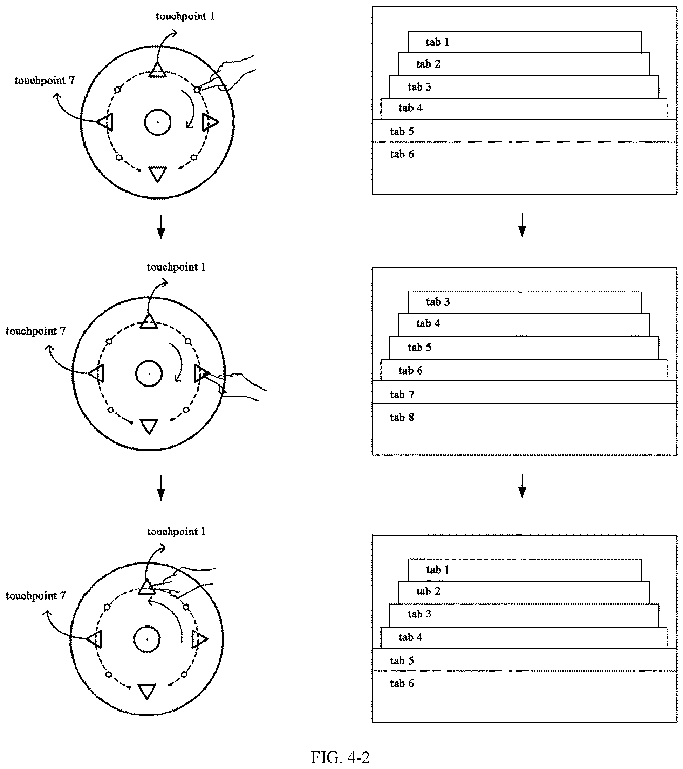

Reference is made to FIG. 4-2, which is another exemplary diagram showing movement of tabs through a sliding touch according to an embodiment of the present invention. As shown in FIG. 4-2, the touch operation passes touchpoint 2, touchpoint 3, touchpoint 2 and touchpoint 1 in sequence, and thus the tabs are first shifted upwards by 2 and then shifted downwards by 2.

In an optional embodiment, in moving the interface elements at step 102, the number of interface elements to be moved in response to one touch signal may be determined based on the moving speed of the sliding touch. That is, the following steps may also be performed:
identifying the moving speed of the sliding touch, and determining whether the moving speed of the sliding touch is higher than a preset speed threshold;
if so, determining a first amount of movement interface elements in response to one touch signal triggered by the sliding touch to be a first value; and
if not, determining a second amount of movement interface elements in response to one touch signal triggered by the sliding touch to be a second value.

The first value is greater than the second value. For example, the second value may be set to 1. The first value may be set to 2, namely, 2 interface elements are moved in response to each triggered touch signal. **In** addition, the trajectory of the sliding touch may be determined based the order of receiving the touch signals, and the moving speed of the sliding touch may be determined based on the length of the trajectory and time when each touch signal is received.

In the above embodiment, in case of a high moving speed (greater than the speed threshold), one touch signal will cause more interface elements to move, and the interface elements will move at a higher speed. In case of a low moving speed (less than or equal to the speed threshold), one touch signal will cause less interface elements to move, and the interface elements will move at a lower speed. Thus, the moving speed of the interface elements may be controlled based on the moving speed of the sliding touch.

In an optional embodiment, in moving the interface elements at step 102, an interface element currently selected when the sliding touch passes the first touchpoint may be determined as a starting point of movement. Alternatively, the interface element corresponding to the first touchpoint passed by the sliding touch may be determined as the starting point of movement.

As an example, it is assumed that a clockwise movement of a sliding touch corresponds to a rightward movement of interface elements, and a counterclockwise movement of a sliding touch corresponds to a leftward movement of interface elements.

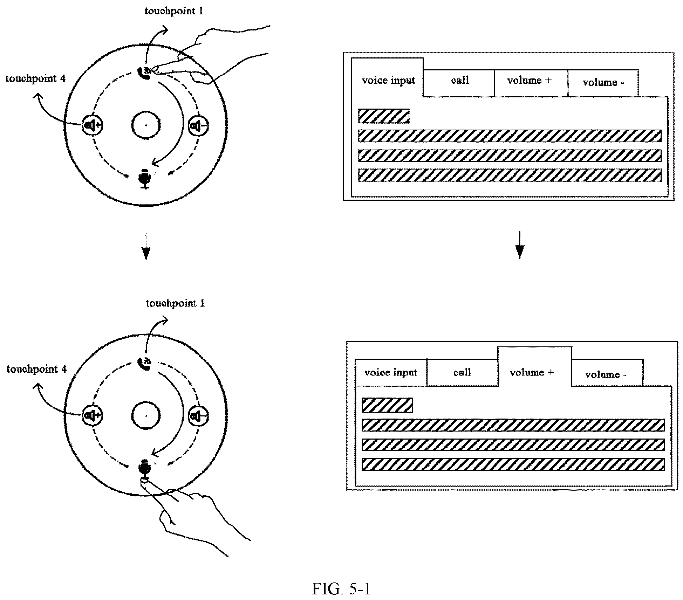

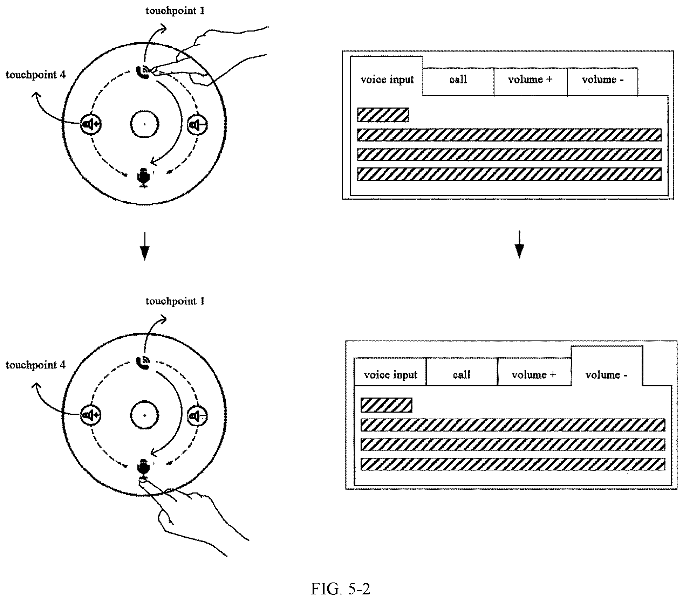

Referring to FIG. 5-1 and FIG. 5-2, which are exemplary diagrams showing movement of tabs through a sliding touch according to an embodiment of the present invention. As shown in FIG. 5-1, when a sliding touch passes the first touchpoint, the interface element currently selected is the "voice input" tab. Thus, tab selection will be shifted to the right by 2, with the "voice input" tab as the starting point. As shown in FIG. 5-2, the interface element currently selected before a sliding touch passes the first touchpoint is the "voice input" tab, and the interface element corresponding to the first touchpoint passed by the sliding touch is the "phone" tab. Thus, tab selection will be shifted to the right by 2, with the "phone" tab as the starting point of the movement.

With the embodiments, a user can select an interface element as desired to be the starting point of a movement, which is not necessarily limited to the currently selected interface element. This can further improve the efficiency of the movement.

Further optionally, if a touch operation is a single touch on one visible touchpoint, a corresponding function may be performed in response to a touch signal corresponding to the visible touchpoint. It can be appreciated that the function corresponding to the touch signal triggered by touching the visible touchpoint may not relate to movement of interface elements. For example, it is assumed that the "phone" icon corresponds to a visible touchpoint. When a touch signal triggered by touching the visible touchpoint is detected, a Bluetooth phone function may be enabled in response to the touch signal.

If the touch operation is a single touch on one hidden touchpoint, the method does not respond to the touch signal corresponding to the hidden touchpoint. In other words, the single touch on the hidden touchpoint will cause no function to perform.

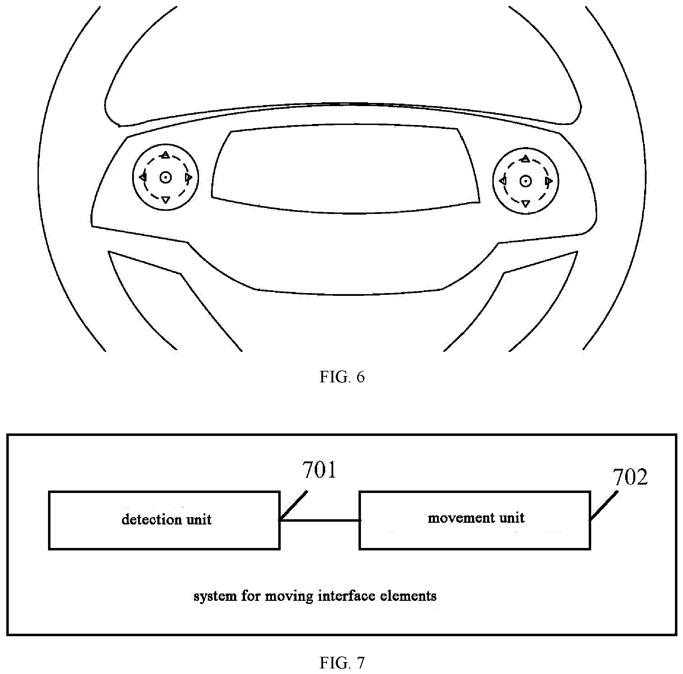

Further optionally, physical buttons may be provided on the steering wheel of a vehicle to facilitate driver's operation. Referring to FIG. 6, which is an exemplary diagram illustrating an arrangement of physical buttons according to an embodiment of the present invention. As shown in FIG. 6, the physical buttons may be provided on two sides of the steering wheel of the vehicle separately. For a first physical button provided on one side of the steering wheel, a set of movement directions of sliding touches on the first physical button corresponds to a set of movement directions of interface elements. For a second physical button provided on the other side of the steering wheel, a set of movement directions of touch operations on the second physical button corresponds to another set of movement directions of interface elements.

In an embodiment of the present invention, it will be appreciated that the set of movement directions of touch operations may consist of a clockwise direction and a counterclockwise direction. The set of movement directions of interface elements may consist of two opposite directions. That is, an upward direction and a downward direction may constitute a set of movement directions of interface elements, and a leftward direction and a rightward direction may constitute a set of movement directions of interface elements.

For example, a clockwise sliding touch on the first button provided on the left side of the steering wheel may correspond to leftward movement of interface elements, a counterclockwise sliding touch on the first button may correspond to rightward movement of interface elements. Then, a clockwise sliding touch on the second button provided on the right side of the steering wheel may correspond to upward movement of interface elements, and a counterclockwise sliding touch on the second button may correspond to downward movement of interface elements.

With the embodiment, the driver can generally perform common operations for moving interface elements through sliding touches on the physical buttons provided on both sides of the steering wheel.

In summary, in the method shown in FIG. 2, the interface elements can be quickly moved through sliding touches on the physical buttons. Such quick movement requires no multiple touches or presses and thus improves the efficiency of movement of the interface elements. Further, hidden touchpoints may be provided on the physical button. Provision of the hidden touchpoints increases the number of interface elements that can be moved through one round of touch slide, without altering the original design of the physical button. Furthermore, the physical buttons are respectively provided on both sides of the steering wheel, and the physical button provided on one side can control interface elements to move in one set of movement directions, and the physical button provided on the other side can control interface elements to move in another set of movement directions. Such arrangement can substantially satisfy the typical needs of drivers for moving interface elements. In addition, the starting point of the movement of the interface elements may be the selected as the interface element corresponding to the first touchpoint through which the sliding touch passes. This allows the user to select a desired interface element as the starting point of the movement, further improving the efficiency of the movement. Moreover, the speed of moving the interface elements may be controlled based on the moving speed of the sliding touch. The faster the sliding touch moves, the faster the interface elements move.

Referring to FIG. 7, which is a schematic structural diagram illustrating a system for moving interface elements according to an embodiment of the present invention. As shown in FIG. 7, the system for moving interface elements may include:
a detection unit 701 configured to detect a touch signal triggered by a touch operation of a finger on a physical button; wherein, the touch operation may include a single touch on one touchpoint and a sliding touch passing through at least two touchpoints; and
a movement unit 702 configured to, if the touch operation is a sliding touch, move the interface elements in a direction corresponding to a movement direction of the sliding touch, wherein the number of the interface elements moved is determined based on the number of touch signals triggered by the sliding touch;
wherein the sliding touch passes at least two adjacent touchpoints on the physical button, and the touch signals are triggered when the finger contacts the touchpoints, each touchpoint corresponding to one touch signal.

The detection unit 701 may be configured to, after detecting a touch signal triggered by a touch operation of a finger on a physical button,
determine whether the difference between the time when the currently detected touch signal is detected and the time when the previously detected touch signal is detected is greater than a preset time threshold; and
if not, determine the touch operation triggering the currently detected touch signal as a sliding touch.

After determining that the touch operation is a sliding touch, the detection unit 701 may trigger the movement unit 702 to, if the touch operation is a sliding touch, move the interface elements in a direction corresponding to a movement direction of the sliding touch, wherein the number of the interface elements moved corresponds to the number of touch signals triggered by the sliding touch.

With the embodiment, N touchpoints corresponding to a sliding touch can be accurately distinguished from one touchpoint corresponding to a single touch, such that the number of interface elements to be moved meets the needs of users.

**In** addition, the physical button can include visible touchpoints and / or hidden touchpoints. A visible touchpoint is visible on the surface of the physical button, and a hidden touchpoint is invisible on the surface of the physical button. With the physical button including hidden touchpoints, precision of sliding touches can be improved without altering the original design of the physical button, thereby increasing the number of interface elements that can be moved through one round of touch slide on the physical button.

Further, if the detection unit 701 determines that the touch operation is a single touch on one hidden touchpoint, it may not respond to the touch signal corresponding to the hidden touchpoint. In other words, the single touch on the hidden touchpoint will cause no function to perform.

The movement unit 702 may be further configured to, when the touch operation is a sliding touch,
identify the moving speed of the sliding touch, and determine whether the moving speed of the sliding touch is higher than a preset speed threshold;
if so, determine a first amount of movement of interface elements in response to one touch signal triggered by the sliding touch to be a first value; and
if not, determine a second amount of movement of interface elements in response to one touch signal triggered by the sliding touch to be a second value;
wherein the first value is greater than the second value.

The physical buttons may be provided on two sides of the steering wheel of the vehicle separately,
for a first physical button provided on one side of the steering wheel, a set of movement directions of the sliding touch on the first physical button corresponds to movement directions of a set of the interface elements;
for a second physical button provided on the other side of the steering wheel, a set of movement directions of the sliding touch on the second physical button corresponds to movement directions of another set of the interface elements.

With the embodiment, the driver can generally perform common operations for moving interface elements through sliding touches on the physical buttons provided on both sides of the steering wheel.

The movement unit 702 may be further configured to:
using an interface element currently selected when the sliding touch passes the first one of the touchpoints as a starting point, move the interface elements in the direction corresponding to the movement direction of the sliding touch; or
using an interface element corresponding to the first one of the touchpoints passed by the sliding touch as a starting point, move the interface elements in the direction corresponding to the movement direction of the sliding touch.

With the embodiment, a user can directly choose the currently selected interface element as the starting point of the movement, which is more intuitive. The user can also choose an interface element as the starting point of the movement as needed, and the starting point is not necessarily limited to the currently selected interface element. Thus, the efficiency of movement can be further improved.

With the system for moving interface elements as shown in FIG. 7, interface elements can be efficiently moved through sliding touches, without multiple touches or presses. Further, hidden touchpoints may be provided on the physical button. Provision of the hidden touchpoints increases the number of interface elements that can be moved through one round of touch slide, without altering the original design of the physical button. Furthermore, the physical buttons are respectively provided on both sides of the steering wheel, and the physical button provided on one side can control interface elements to move in one set of movement directions, and the physical button provided on the other side can control interface elements to move in another set of movement directions. Such arrangement can substantially satisfy the typical needs of drivers for moving interface elements. In addition, the starting point of the movement of the interface elements may be the selected as the interface element corresponding to the first touchpoint through which the sliding touch passes. This allows the user to select a desired interface element as the starting point of the movement, further improving the efficiency of the movement.

In accordance with an embodiment of the present invention, there is provided a vehicle comprising the system for moving interface elements as shown in FIG. 7.

In accordance with an embodiment of the present invention, there is provided a computer-readable storage medium having stored a computer program, wherein execution of the computer program causes a computer to perform the method for moving interface elements as shown in FIG. 1.

In accordance with an embodiment of the present invention, there is provided a computer program product comprising a non-transitory computer-readable storage medium having stored a computer program thereon, and execution of the computer program causes a computer to perform the method for moving interface elements as shown in FIG. 1.

It should be understood that references throughout the specification to "one embodiment" or "an embodiment" mean that a particular feature, structure, or characteristic described in connection with the embodiment is included in at least one embodiment of the present invention. Thus, the phrase "in one embodiment" or "in an embodiment" used throughout the specification is not necessarily referring to the same embodiment. In addition, the specific features, structures or characteristics may be combined in any suitable manner in one or more embodiments. Those skilled in the art will also appreciate that the embodiments described herein are alternative embodiments, not all illustrated acts or modules are required to implement the present invention.

In various embodiments of the present invention, it should be understood that the order of the sequence numbers of the processes described above is not meant to imply the necessary ordering in which the processes are performed. Rather the ordering of the processes should be determined by their functions and inherent logics. The order of the sequence numbers should not be construed as any limitation on the scope of the embodiments of the present invention.

The units described above as separate components may or may not be physically separate, and the components shown as units may or may not be physical units. That is, they may be located in one place, or may be distributed across multiple network units. Some or all of the units may be selected in accordance with actual needs in order to achieve the purpose of the embodiments of the present invention.

Furthermore, the various functional units may be integrated in one processing unit, or may physically exist as separate units, or two or more units may be integrated in one unit. The aforementioned integrated units may be implemented in the form of hardware or software functional units.

The aforementioned integrated units may be stored in a computer accessible memory when implemented in the form of a software functional units and sold or used as a standalone product. Based on such understanding, the technical solution of the present invention in essence, or all or part of the technical solution that contributes to the state of the art, may be embodied in the form of a software product. The software product may be stored on a memory device and includes a number of instructions to cause a computer device (which may be a personal computer, server, or network device, or the like, particularly a processor in a computer device) to perform some or all of the steps of the methods of the various embodiments of the present invention as described above.

Those of ordinary skills in the art will appreciate that all or some of the steps of the various methods of the embodiments described above may be accomplished by relevant hardware under instructions of a computer program. The computer program may be stored in a computer-readable storage medium such as read-only memory (ROM), random-access memory (RAM), programmable read-only memory (PROM), erasable programmable read-only memory (EPROM), one-time programmable read-only memory (OTPROM), electrically erasable programmable read-only memory (EEPROM), compact-disc read-only memory (CD-ROM) or other optical disk storage device, magnetic disk storage device, magnetic tape storage device, or any other medium that can be used to carry or store data.

The embodiments of the method and the system for moving interface elements, the vehicle and the storage medium of the present invention have been described in detail above. While specific examples have been described herein to illustrate the principles and embodiments of the present invention, the description of the examples is provided solely to facilitate understanding of the principles of the present invention and its core concept. It will be apparent to those skilled in the art that various changes may be made to the specific embodiments and applications based on the principle of the present invention as defined by the appended claims, and that the present specification should not be construed as limiting the present invention.

## Claims

1. A method for moving interface elements, comprising:
detecting (101) touch signals triggered by a touch operation of a finger on a physical button, wherein the physical button is provided on a steering wheel of a vehicle; and
determining (102), when a time difference between a currently detected touch signal and a previously detected touch signal preceding to the currently detected touch signal is less than or equal to a preset time threshold, that the touch operation is a sliding touch, and moving, using an interface element corresponding to the first one of the touchpoints passed by the sliding touch as a starting point, the interface elements in a direction corresponding to a movement direction of the sliding touch, wherein the number of steps the interface elements are moved by is determined based on the number of touch signals triggered by the sliding touch,
wherein the sliding touch passes at least two adjacent touchpoints on the physical button, and the touch signals are triggered when the finger contacts the touchpoints, each touchpoint corresponding to one touch signal.

2. The method of claim 1, wherein:
the touchpoints comprise visible touchpoints and hidden touchpoints;
the visible touchpoints are visible on the surface of the physical button;
the hidden touchpoints are invisible on the surface of the physical button; and
if the touch operation is a single touch on one hidden touchpoint, no touch signal corresponding to the hidden touchpoint is triggered.

3. The method of claim 1 or 2, wherein two physical buttons are respectively provided on two sides of the steering wheel of the vehicle, wherein:
for a first physical button provided on one side of the steering wheel, a set of movement directions of the sliding touch on the first physical button corresponds to movement directions of a set of the interface elements; and
for a second physical button provided on the other side of the steering wheel, a set of movement directions of the sliding touch on the second physical button corresponds to movement directions of another set of the interface elements.

4. The method of claim 1, the method further comprising, after determining that the touch operation is a sliding touch:
determining whether a moving speed of the sliding touch is higher than a preset speed threshold; and
if so, determining a first amount of movement of interface elements in response to one touch signal triggered by the sliding touch to be a first value, and
if not, determining a second amount of movement of interface elements in response to one touch signal triggered by the sliding touch to be a second value,
wherein the first value is greater than the second value.

5. A system for moving interface elements, comprising:
a detection unit (701) configured to detect touch signals triggered by a touch operation of a finger on a physical button, wherein the physical button is provided on a steering wheel of a vehicle;
a movement unit (702) configured to determine, when a time difference between a currently detected touch signal and a previously detected touch signal preceding to the currently detected touch signal is less than or equal to a preset time threshold, that the touch operation is a sliding touch, and move, using an interface element corresponding to the first one of the touchpoints passed by the sliding touch as a starting point, the interface elements in a direction corresponding to a movement direction of the sliding touch, wherein the number of steps the interface elements are moved by is determined based on the number of touch signals triggered by the sliding touch; and
a signal generation unit configured to, trigger the touch signals when the finger contacts the touchpoints, each touchpoint corresponding to one touch signal, wherein the sliding touch passes at least two adjacent touchpoints on the physical button.

6. The system of claim 5, wherein:
the touchpoints comprise visible touchpoints and hidden touchpoints;
the visible touchpoints are visible on the surface of the physical button;
the hidden touchpoints are invisible on the surface of the physical button and are configured not to trigger a touch signal in response to a single touch thereon.

7. The system of claim 5 or 6, wherein two physical buttons are respectively provided on two sides of the steering wheel of the vehicle, wherein:
for a first physical button provided on one side of the steering wheel, a set of movement directions of the sliding touch on the first physical button corresponds to movement directions of a set of the interface elements; and
for a second physical button provided on the other side of the steering wheel, a set of movement directions of the sliding touch on the second physical button corresponds to movement directions of another set of the interface elements.

8. The system of claim 5, wherein the determination unit is further configured to, after determining that the touch operation is a sliding touch:
determine whether a moving speed of the sliding touch is higher than a preset speed threshold; and
if so, determine a first amount of movement of interface elements in response to one touch signal triggered by the sliding touch to be a first value, and
if not, determine a second amount of movement of interface elements in response to one touch signal triggered by the sliding touch to be a second value,
wherein the first value is greater than the second value.

9. A vehicle comprising the system for moving interface elements of any one of claims 5 to 8.

10. A computer storage medium having stored thereon instructions to cause the system of any one of claims 5 to 8 to perform the method for moving interface elements of any one of claims 1 to 4.

## Patentansprüche

1. Verfahren zum Bewegen von Schnittstellenelementen, das Folgendes beinhaltet:
Erkennen (101) von Berührungssignalen, die durch eine Berührungsoperation eines Fingers auf einer physischen Taste ausgelöst werden, wobei die physische Taste an einem Lenkrad eines Fahrzeugs vorgesehen ist; und
Feststellen (102), wenn eine Zeitdifferenz zwischen einem aktuell erkannten Berührungssignal und einem zuvor erkannten Berührungssignal vor dem aktuell erkannten Berührungssignal so groß wie oder kleiner als ein voreingestellter Zeitgrenzwert ist, dass die Berührungsoperation eine Gleitberührung ist, und Bewegen, unter Verwendung eines Schnittstellenelements entsprechend dem ersten der von der Gleitberührung passierten Berührungspunkte als Startpunkt, der Schnittstellenelemente in einer Richtung entsprechend einer Bewegungsrichtung der Gleitberührung, wobei die Anzahl der Schritte, um die die Schnittstellenelemente bewegt werden, auf der Basis der Anzahl der durch die Gleitberührung ausgelösten Berührungssignale bestimmt wird,
wobei die Gleitberührung mindestens zwei benachbarte Berührungspunkte auf der physischen Taste passiert und die Berührungssignale ausgelöst werden, wenn der Finger die Berührungspunkte berührt, wobei jeder Berührungspunkt einem Berührungssignal entspricht.

2. Verfahren nach Anspruch 1, wobei:
die Berührungspunkte sichtbare Berührungspunkte und verborgene Berührungspunkte umfassen;
die sichtbaren Berührungspunkte auf der Oberfläche der physischen Taste sichtbar sind;
die verborgenen Berührungspunkte auf der Oberfläche der physischen Taste unsichtbar sind; und
wenn die Berührungsoperation eine Einzelberührung auf einem verborgenen Berührungspunkt ist, kein Berührungssignal entsprechend dem verborgenen Berührungspunkt ausgelöst wird.

3. Verfahren nach Anspruch 1 oder 2, wobei zwei physische Tasten jeweils auf zwei Seiten des Lenkrads des Fahrzeugs vorgesehen sind, wobei:
für eine auf einer Seite des Lenkrads vorgesehene erste physische Taste ein Satz von Bewegungsrichtungen der Gleitberührung auf der ersten physischen Taste Bewegungsrichtungen eines Satzes der Schnittstellenelemente entspricht; und
für eine auf der anderen Seite des Lenkrads vorgesehene zweite physische Taste ein Satz von Bewegungsrichtungen der Gleitberührung auf der zweiten physischen Taste Bewegungsrichtungen eines anderen Satzes der Schnittstellenelemente entspricht.

4. Verfahren nach Anspruch 1, wobei das Verfahren ferner nach dem Feststellen, dass die Berührungsoperation eine Gleitberührung ist, Folgendes beinhaltet:
Feststellen, ob eine Bewegungsgeschwindigkeit der Gleitberührung höher ist als ein voreingestellter Geschwindigkeitsschwellenwert; und
wenn ja, Bestimmen eines ersten Bewegungsbetrags von Schnittstellenelementen als Reaktion auf ein durch die Gleitberührung ausgelöstes Berührungssignal als ersten Wert, und
wenn nicht, Bestimmen eines zweiten Bewegungsbetrags von Schnittstellenelementen als Reaktion auf ein durch die Gleitberührung ausgelöstes Berührungssignal als zweiten Wert,
wobei der erste Wert größer ist als der zweite Wert.

5. System zum Bewegen von Schnittstellenelementen, das Folgendes umfasst:
eine Erkennungseinheit (701), konfiguriert zum Erkennen von durch eine Berührungsoperation eines Fingers auf einer physischen Taste ausgelöste Berührungssignale, wobei die physische Taste an einem Lenkrad eines Fahrzeugs vorgesehen ist;
eine Bewegungseinheit (702), konfiguriert zum Feststellen, wenn eine Zeitdifferenz zwischen einem aktuell erkannten Berührungssignal und einem zuvor erkannten Berührungssignal vor dem aktuell erkannten Berührungssignal so groß wie oder kleiner als ein voreingestellter Zeitgrenzwert ist, dass die Berührungsoperation eine Gleitberührung ist, und Bewegen, unter Verwendung eines Schnittstellenelements entsprechend dem ersten der durch die Gleitberührung passierten Berührungspunkte als Startpunkt, der Schnittstellenelemente in einer Richtung entsprechend einer Bewegungsrichtung der Gleitberührung, wobei die Anzahl der Schritte, um die die Schnittstellenelemente bewegt werden, auf der Basis der Anzahl von durch die Gleitberührung ausgelösten Berührungssignale bestimmt wird; und
eine Signalerzeugungseinheit, konfiguriert zum Auslösen der Berührungssignale, wenn der Finger die Berührungspunkte berührt, wobei jeder Berührungspunkt einem Berührungssignal entspricht, wobei die Gleitberührung mindestens zwei benachbarte Berührungspunkte auf der physischen Taste passiert.

6. System nach Anspruch 5, wobei:
die Berührungspunkte sichtbare Berührungspunkte und verborgene Berührungspunkte umfassen;
die sichtbaren Berührungspunkte auf der Oberfläche der physischen Taste sichtbar sind;
die verborgenen Berührungspunkte auf der Oberfläche der physischen Taste unsichtbar und zum Nichtauslösen eines Berührungssignals als Reaktion auf eine Einzelberührung konfiguriert sind.

7. System nach Anspruch 5 oder 6, wobei zwei physische Tasten jeweils auf zwei Seiten des Lenkrads des Fahrzeugs vorgesehen sind, wobei:
für eine auf einer Seite des Lenkrads vorgesehene erste physische Taste ein Satz von Bewegungsrichtungen der Gleitberührung auf der ersten physischen Taste Bewegungsrichtungen eines Satzes der Schnittstellenelemente entspricht; und
für eine auf der anderen Seite des Lenkrads vorgesehene zweite physische Taste ein Satz von Bewegungsrichtungen der Gleitberührung auf der zweiten physischen Taste Bewegungsrichtungen eines anderen Satzes der Schnittstellenelemente entspricht.

8. System nach Anspruch 5, wobei die Bestimmungseinheit ferner, nach dem Feststellen, dass die Berührungsoperation eine Gleitberührung ist, konfiguriert ist zum:
Feststellen, ob eine Bewegungsgeschwindigkeit der Gleitberührung höher ist als ein voreingestellter Geschwindigkeitsschwellenwert; und
wenn ja, Bestimmen eines ersten Bewegungsbetrags von Schnittstellenelementen als Reaktion auf ein durch die Gleitberührung ausgelöstes Berührungssignal als ersten Wert, und
wenn nicht, Bestimmen eines zweiten Bewegungsbetrags von Schnittstellenelementen als Reaktion auf ein durch die Gleitberührung ausgelöstes Berührungssignal als zweiten Wert,
wobei der erste Wert größer ist als der zweite Wert.

9. Fahrzeug, das das System zum Bewegen von Schnittstellenelementen nach einem der Ansprüche 5 bis 8 umfasst.

10. Computerspeichermedium, auf dem Befehle gespeichert sind, um das System nach einem der Ansprüche 5 bis 8 zum Durchführen des Verfahrens zum Bewegen von Schnittstellenelementen nach einem der Ansprüche 1 bis 4 zu veranlassen.

## Revendications

1. Procédé permettant de déplacer des éléments d'interface, comprenant :
une détection (101) de signaux de contact déclenchés par une opération de contact d'un doigt sur un bouton physique, dans lequel le bouton physique est fourni sur un volant de direction d'un véhicule ; et
une détermination (102), lorsqu'un écart temporel entre un signal de contact actuellement détecté et un signal de contact précédemment détecté précédant le signal de contact actuellement détecté est inférieur ou égal à un seuil de temps prédéfini, du fait que l'opération de contact est un contact de glissement, et un déplacement, à l'aide d'un élément d'interface correspondant au premier des points de contact traversés par le contact de glissement à titre de point de départ, des éléments d'interface dans une direction correspondant à une direction de mouvement du contact de glissement, dans lequel le nombre d'étapes au moyen desquelles les éléments d'interface sont déplacés est déterminé sur la base du nombre de signaux de contact déclenchés par le contact de glissement,
dans lequel le contact de glissement traverse au moins deux points de contact adjacents sur le bouton physique, et les signaux de contact sont déclenchés lorsque le doigt entre en contact avec les points de contact, chaque point de contact correspondant à un signal de contact.

2. Procédé selon la revendication 1, dans lequel :
les points de contact comprennent des points de contact visibles et des points de contact cachés ;
les points de contact visibles sont visibles sur la surface du bouton physique ;
les points de contact cachés sont invisibles sur la surface du bouton physique ; et
si l'opération de contact est un contact unique sur un point de contact caché, aucun signal de contact correspondant au point de contact caché n'est déclenché.

3. Procédé selon la revendication 1 ou 2, dans lequel deux boutons physiques sont respectivement fournis sur deux côtés du volant de direction du véhicule, dans lequel :
pour un premier bouton physique fourni sur un côté du volant de direction, un ensemble de directions de déplacement du contact de glissement sur le premier bouton physique correspond à des directions de déplacement d'un ensemble des éléments d'interface ; et
pour un second bouton physique fourni sur l'autre côté du volant de direction, un ensemble de directions de déplacement du contact de glissement sur le second bouton physique correspond à des directions de déplacement d'un autre ensemble d'éléments d'interface.

4. Procédé selon la revendication 1, le procédé comprenant en outre, après une détermination du fait que l'opération de contact est un contact de glissement :
une détermination du fait qu'une vitesse de déplacement du contact de glissement est supérieure ou non à un seuil de vitesse prédéfini ; et
si tel est le cas, une détermination d'une première quantité de déplacement d'éléments d'interface en réponse à un signal de contact déclenché par le contact de glissement pour qu'elle soit une première valeur, et
si tel n'est pas le cas, une détermination d'une seconde quantité de déplacement d'éléments d'interface en réponse à un signal de contact déclenché par le contact de glissement pour qu'elle soit une seconde valeur,
dans lequel la première valeur est supérieure à la seconde valeur.

5. Système permettant un déplacement d'éléments d'interface, comprenant :
une unité de détection (701) configurée pour détecter des signaux de contact déclenchés par une opération de contact d'un doigt sur un bouton physique, dans lequel le bouton physique est fourni sur un volant de direction d'un véhicule ;
une unité de déplacement (702) configurée pour déterminer, lorsqu'un écart temporel entre un signal de contact actuellement détecté et un signal de contact précédemment détecté précédant le signal de contact actuellement détecté est inférieur ou égal à un seuil de temps prédéfini,
que l'opération de contact est un contact de glissement, et un déplacement, à l'aide d'un élément d'interface correspondant au premier des points de contact traversés par le contact de glissement à titre de point de départ, des éléments d'interface dans une direction correspondant à une direction de mouvement du contact de glissement, dans lequel le nombre d'étapes au moyen desquelles les éléments d'interface sont déplacés est déterminé sur la base du nombre de signaux de contact déclenchés par le contact de glissement, et
une unité de génération de signal configurée pour déclencher les signaux de contact lorsque le doigt entre en contact avec les points de contact, chaque point de contact correspondant à un signal de contact, dans lequel le contact de glissement traverse au moins deux points de contact adjacents sur le bouton physique.

6. Système selon la revendication 5, dans lequel :
les points de contact comprennent des points de contact visibles et des points de contact cachés ;
les points de contact visibles sont visibles sur la surface du bouton physique ;
les points de contact cachés sont invisibles sur la surface du bouton physique et sont configurés pour ne déclencher aucun signal de contact en réponse à un unique contact sur eux.

7. Système selon la revendication 5 ou 6, dans lequel deux boutons physiques sont respectivement fournis sur deux côtés du volant de direction du véhicule, dans lequel :
pour un premier bouton physique fourni sur un côté du volant de direction, un ensemble de directions de déplacement du contact de glissement sur le premier bouton physique correspond à des directions de déplacement d'un ensemble des éléments d'interface ; et
pour un second bouton physique fourni sur l'autre côté du volant de direction, un ensemble de directions de déplacement du contact de glissement sur le second bouton physique correspond à des directions de déplacement d'un autre ensemble d'éléments d'interface.

8. Système selon la revendication 5, dans lequel l'unité de détermination est en outre configurée pour, après une détermination du fait que l'opération de contact est un contact de glissement :
déterminer si une vitesse de déplacement du contact de glissement est supérieure ou non à un seuil de vitesse prédéfini ; et
si tel est le cas, une détermination d'une première quantité de déplacement d'éléments d'interface en réponse à un signal de contact déclenché par le contact de glissement pour qu'elle soit une première valeur, et
si tel n'est pas le cas, une détermination d'une seconde quantité de déplacement d'éléments d'interface en réponse à un signal de contact déclenché par le contact de glissement pour qu'elle soit une seconde valeur,
dans lequel la première valeur est supérieure à la seconde valeur.

9. Véhicule comprenant le système permettant de déplacer des éléments d'interface selon l'une quelconque des revendications 5 à 8.

10. Support de stockage informatique ayant des instructions stockées dessus qui amènent le système selon l'une quelconque des revendications 5 à 8 à réaliser le procédé permettant un déplacement d'éléments d'interface selon l'une quelconque des revendications 1 à 4.
